# EUROPÄISCHE PATENTSCHRIFT

(11) **EP 1 379 979 B1**
(45) Veröffentlichungstag und Bekanntmachung des Hinweises auf die Patenterteilung: **18.03.2009**
(21) Anmeldenummer: 02715458.2
(22) Anmeldetag: 19.01.2002
(51) Int. Cl.: G06F 17/50

(54) **VERFAHREN ZUR KOPPLUNG PHYSIKALISCHER UND GEOMETRISCHER BERECHNUNGSPROGRAMME MIT EINER DATENVERARBEITUNGS-ANLAGE**
METHOD FOR COUPLING PHYSICAL AND GEOMETRICAL CALCULATION PROGRAMS TO A DATA PROCESSING SYSTEM
PROCEDE DE COUPLAGE DE PROGRAMMES DE CALCUL PHYSIQUES ET GEOMETRIQUES AU MOYEN D'UN DISPOSITIF DE TRAITEMENT DE DONNEES

(30) Priorität: 12.02.2001 DE 10106639
(43) Veröffentlichungstag der Anmeldung: 14.01.2004
(73) Patentinhaber: Forschungszentrum Karlsruhe GmbH, 76133 Karlsruhe (DE)
(72) Erfinder: KREVET, Berthold, 76706 Dettenheim (DE)
(86) Internationale Anmeldenummer: PCT/EP2002/000530
(87) Internationale Veröffentlichungsnummer: WO 2002/065344

(56) Entgegenhaltungen:
- KREVET B ET AL: "Coupling of FEM programs for simulation of complex systems" 1998 INTERNATIONAL CONFERENCE ON MODELING AND SIMULATION OF MICROSYSTEMS, SEMICONDUCTORS, SENSORS AND ACTUATORS, PROCEEDINGS OF MODELLING AND SIMULATION OF MICROSYSTEMS, SEMICONDUCTORS, SENSORS AND ACTUATORS, SANTA CLARA, CA, USA, 6-8 APRIL 1998, Seiten 320-324, XP008018397 1998, Cambridge, MA, USA, Computational Publications, USA ISBN: 0-9666135-0-3

## Beschreibung

Die Erfindung betrifft ein Verfahren zur Kopplung, Preprozessierung, physikalischer und geometrischer Berechnungsprogramme mit einer Datenverarbeitungsanlage mit denen physikalische, untereinander gekoppelte Größen sowie geometrische Größen bei der Simulation eines Bauteils für einen technischen Einsatz berechnet werden.

Für die Berechnung komplizierter technischer Bauteile ist oft die Verwendung mehrerer Berechnungsprogramme erforderlich. Zum Beispiel ist bei der Berechnung thermischer Spannungen in einem Körper vor der mechanischen Berechnung die Ermittlung der Temperaturverteilung im Bauteil notwendig. Beide Berechnungen erfolgen mit unterschiedlichen Programmen. In der Regel wird die Methode der Finiten Elemente, FEM, verwendet.

Die zur Berechnung notwendigen Programme zu einem einzigen Berechnungsprogramm zu verkoppeln ist nicht sinnvoll, da der Speicherbedarf und die Rechenzeit etwa quadratisch mit der Anzahl der zu berechnenden physikalischen Größen wächst. Werden die Rechnungen einzeln durchgeführt, ergibt sich das Problem der Automatisierung der einzelnen Programmaufrufe und des Datenaustausches. Oft ist die Berechnung einer Größe nur in einem Teilgebiet des Bauteils erforderlich und benötigt eine individuelle Vernetzung, so dass verschiedene Maschennetze für eine komplizierte Berechnung benötigt werden.

B. Krevet und W. Kaboth erläutern in XP008018397 auf den Seiten 320 bis 324 unter dem Titel: "coupling of FEM Programs for Simulation of Complex Systems*", wie FEM-Programme auf einer Da tenverarbei tungsanlage gekoppelt werden und der Rechenablauf erfolgt, dazu werden sie zusammen mit einem Kopplungsprogramm von einem Steuerprogramm aufgerufen. Das Steuerprogramm erhält die Informationen über die Aufruffolgen durch Steuerdaten in einem Asci-File. Dieser File wird mit einem Editor erstellt, der bei Berechnungen, in denen sehr viele Programme involviert sind, sehr schwierig zu erstellen ist*.

In der US 5,963,731 wird ein Verfahren zum Unterstützen der Ausübung von mehreren Simulationsprogrammen für die gekoppelte Simulation beschrieben. Jedes einer Vielzahl von Simulationsprogrammen ist mit einer Datenbibliothek verbunden und wird als ein Ausführungsprozess ausgeführt. Ein Datenwandlungsprozess wird mit jedem Simulationsprozess ausgeführt. Durch Datenaustausch, der aus der Simulation durch den Simulationsprozess eines der Simulationsprogramme mit Simulationsprozessen der andern Simulationsprogramme herrührt, bestimmt der Datenwandlungsprozess, vorgesehen für einen Sendesimulationsprozess, einen Empfangssimulationsprozess, an den die Daten gesandt werden müssen, und sendet die Daten an den Datenwandlungsprozess, der zu dem Empfangssimulationsprozess gehört. Der Datenwandlungsprozess für den Empfangssimulationsprozess führt eine Datenwandlung durch, um den Unterschied zwischen der Basis des Sendesimulationsprozesses und der Basis des Empfangssimulationsprozesses aufzufangen, und überträgt die Daten nach der Wandlung an den Empfangssimulationsprozess. Es gibt keine Bedienerelemente, die eine einfache, verallgemeinerbare Bedienung zulassen.

Der Erfindung liegt die Aufgabe zugrunde, ein Verfahren zu entwickeln, mit dem Berechnungsprogramme zur Berechnung physikalischer und geometrischer Größen bequem und rasch miteinander verknüpft werden können, um ein neues technisches Bauelement hinsichtlich seiner Geometrie und technischen Eigenschaften simulieren zu können. Die Programmkopplung soll keine für ein individuelles Bauteil insgesamt maßgeschneiderte Programmierung sein, vielmehr soll diese Kopplung vor der eigentlichen Berechnung für beliebige Simulationsvorhaben tauglich sein.

Die Aufgabe wird durch ein Verfahren gemäß dem Oberbegriff und den kennzeichnenden Merkmalen des Anspruchs 1 gelöst. Zur Lösung dieses Problems wird ein Programmpaket zur Lenkung der Berechnung, die Preprozessierung, mit folgenden Eigenschaften entwickelt:
I. Alle für eine Berechnung benötigten Berechnungsprogramme und die Reihenfolge ihrer Aufrufe werden in ein File geschrieben.
II. Alle Aufgaben, die von den einzelnen Programmen bei einem Aufruf ausgeführt werden sollen, werden ebenfalls in Form von Kommandoanweisungen, die in nummerierten SCRIPTs zusammengefasst sind, in das File geschrieben.
III: Um möglichst wenig Änderungen in den vorhandenen Berechnungsprogrammen vorzunehmen, wird jedem Berechnungsprogramm ein Übersetzer(Interpreter)-Programm zur Seite gestellt, das die Kommandos interpretiert und die entsprechende Umsetzung vornimmt. Das können Export-Anweisungen für Daten für ein anderes Berechnungsprogramm, Änderung von Volumendaten und Randbedingungen oder Steueranweisungen für das Berechnungsprogramm sein. Die Aufruffolge der Interpreter-Programme muss ebenfalls im File vermerkt sein.
IV. Ein übergeordnetes Steuerprogramm startet alle Berechnungsprogramme und die zugeordneten Interpreter-Programme. Bei jedem Aufruf eines Interpreter-Programms wird das entsprechende SCRIPT dem Programm übergeben.

Durch dieses Verfahren des Preprozessierens lassen sich die Berechnungen eines Bauteils in einer automatischen Schrittabfolge durchführen, die für andere Vorhaben leicht zusammenstellbar, also nicht individuell gebunden ist.

Um die Eingabe und Steuerung komplizierter Rechenabläufe zu vereinfachen, wurde diese Preprozessierung, d. h. das Verfahren für die gekoppelte Simulationen/Berechnung eines technischen Bauteils entwickelt. FEM- und Koppelprogramme sind vorhanden. Sie werden über die Festlegung der Aufruffolge und Aufgaben miteinander verkoppelt. Das wird interaktiv auf dem an einen leistungsfähigen Rechner angeschlossenen Bildschirm erledigt, und zwar wie in den kennzeichnenden Merkmalen des Verfahrensanspruchs 1 beschrieben ist:

Die Berechnungsprogramme werden nicht durch ihre Namen gekennzeichnet sondern durch Operatorsymbole für die entsprechenden physikalischen Größen die sie berechnen. Das Programm TOSCA, welches elektrische und magnetische Felder berechnet, wird z. B. durch die Operatorsymbole E und B dargestellt.

Alle Operatoren sind in einer Ebene, auf dem Bildschirm, dargestellt. Für jeden Operator sind in Klammern die anderen Operatoren als Argument eingetragen, von denen er abhängig sein kann, z. B. magnetische Feld B(T, E, j), also von der Temperatur T, dem elektrischen Feld E und der Stromdichte j.

Neben den Operatorsymbolen für die Berechnung physikalischer Größen sind auch Symbole für einen Maschennetzgenerator für die FEM-Programme und für das nur die Geometrie beschreibende Maschennetz vorhanden. Berechnete physikalische Größen stehen damit direkt zur Änderung des Maschennetzes oder der Geometrie bereit.

Um die Abhängigkeiten zu aktivieren, werden die in Klammern stehenden Operatoren mit einer Anzeigereinrichtung, beispielsweise der PC-Maus, ausgedeutet und durch anklicken ausgewählt. Die Operatoren werden dann zur Durchführung einer Berechnung mit der Maus auf ein zentrales Aktionsfeld aus Zeilen und Spalten in dieser Ebene, die Matrix, gezogen. Jedes Feldelement der Matrix entspricht einem Rechenlauf. Ist ein Operatoren von anderen abhängig sind, werden auch diese Operatoren automatisch in der Spalte des Operators eingetragen.

Der Aufruf der Programme erfolgt nach der Anordnung der Operatoren in den Spalten in der Reihenfolge von oben nach unten. Wenn eine Spalte abgearbeitet ist, erfolgt der Aufruf der nächsten Spalte.

Eine Spalte kann auch mehrfach abgearbeitet werden, wenn physikalische Größen iterativ immer nach dem gleichen Schema berechnet werden. Die Anzahl der Iterationen wird in einem Eingabefeld oberhalb der Spalte in der Eingabezeile, repeat steps, vermerkt (Anspruch 2).

Jeder Spalte ist für die Berechnung zeitabhängiger Vorgänge ein festes Zeitintervall zugeordnet. Das Zeitintervall wird in einem Eingabefeld unterhalb der Spalte in der Zeile, Time, eingegeben (Anspruch 2).

In dem mit Operatoren gefüllten Aktionsfeld können nun Operatoren einzeln oder in Gruppen selektiert werden, Scriptbuilder, um ihnen spezielle Aufgaben für den Rechenlauf in Form von Befehlsleisten, SCRIPTs genannt, zu geben. Die SCRIPTs enthalten zumindest Kommandos zum Export von Daten, zum Ändern der Randbedingungen und Materialdaten und Steuerparameter der Programme.

Durch die Befehle: " before calculation do" oder "after calculation do ", die den Befehlsfolgen vorangestellt werden, wird angegeben, ob sie vor oder nach dem Start eines Rechenprogramms ausgeführt werden sollen.

Die Nummer des einem Operator zugeordneten SCRIPTs wird in dem auf das Aktionsfeld gezogenen Operatorsymbol angezeigt. Somit läßt sich sofort erkennen, in welcher Reihenfolge die Rechenprogramme aufgerufen werden und welche Aufgaben bei jedem Aufruf durchgeführt werden. Ein Teil der SCRIPT-Befehle wird automatisch erzeugt, wenn Abhängigkeiten zwischen den Operatoren definiert sind.

Mit dem Preprozessor wird interaktiv eine Liste, Boundary set up, erzeugt, in der für z.B. mit Zahlen markierten Randflächen angegeben ist, welche Randbedingungen bei den verschiedenen Berechnungen hierfür gelten. Wenn eine solche Liste vorliegt, werden die entsprechenden Kommandos zum Umsetzen oder Erzeugen der Randbedingung automatisch in den entsprechenden SCRIPTs eingetragen (Anspruch 3).

Das Verfahren bzw. der Preprozessor bietet folgende Vorteile:
- Eine leichte Zusammenstellung und Kopplung von Berechnungsprogrammen zur Simulation eines technischen Bauteils, wie es in einem technischen System bestimmten Naturkräften ausgesetzt ist.
- Eine übersichtliche Anordnung aller zu berechnender physikalischer Größen und ihren Abhängigkeiten untereinander auf dem/r Feld/Oberfläche, an einem an eine Datenverarbeitungsanlage gekoppelten Bildschirm.
- Durch das interaktive Zusammenstellen des gesamten Rechenablaufes durch "Drag and Drop" von Symbolen der zu berechnenden Größen in das in dem Feld, dem Bildschirm, mittig liegende Aktionsfeld.
- Bei Berechnungen, in denen sehr viele Programme involviert sind, lässt sich ein zu erstellender File wesentlich leichter erstellen und schnell und übersichtlich graphisch abarbeiten.

Die Erfindung wird anhand der Zeichnung mit den Figuren 1 bis 4 veranschaulicht. Die Figuren zeigen:
- Figur 1: die Preprozessor-Ebene ohne Eingabe,
- Figur 2: die Preprozessor-Ebene mit Eingabebeispiel,
- Figur 3: die SCRIPT-Builder-Ebene,
- Figur 4: die SCRIPT-Builder-Ebene mit Toolbox,
- Figur 5: das Boundary set up.

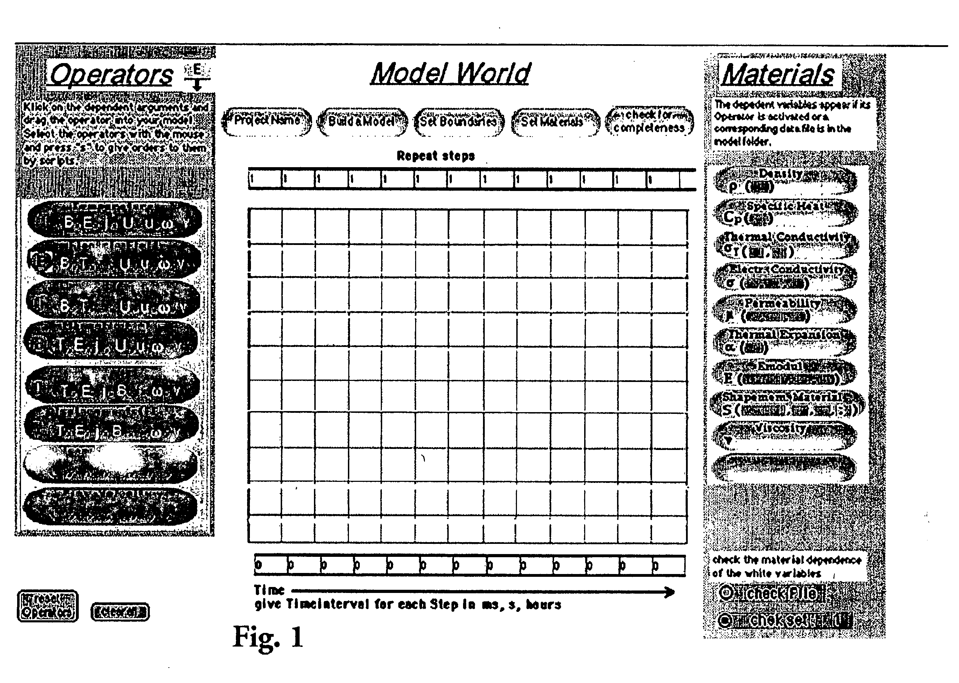

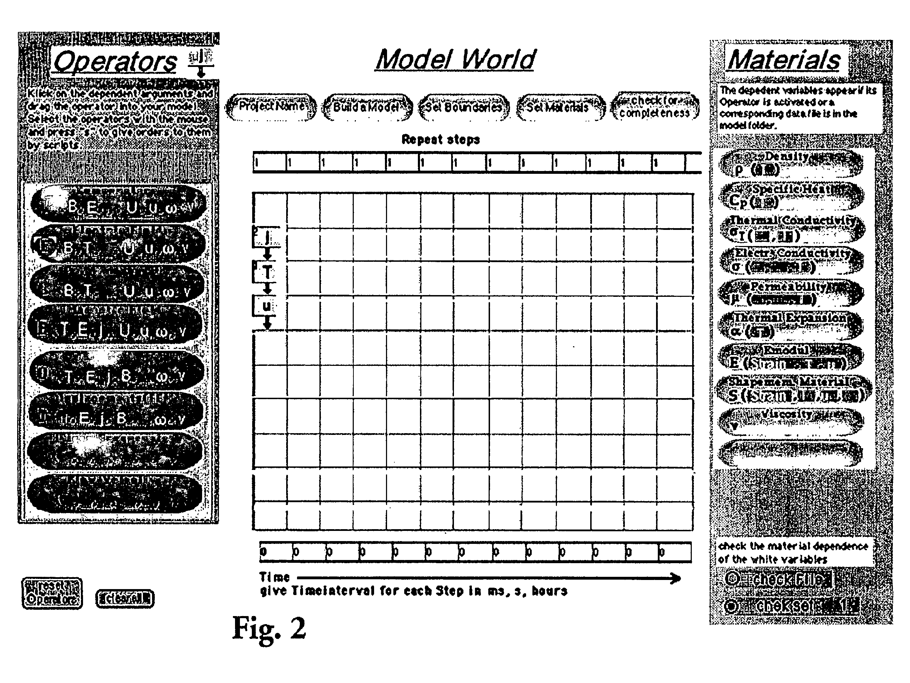

Vor dem Verfahren der gekoppelten Simulation des zu simulierenden technischen Bauteils wird davon ein Modell erstellt, in dem Oberflächen und Volumenelemente mit Zahlen markiert sind. Das kann beispielsweise eine Art Draht- oder Kantenmodell sein. Im Falle, dass dieses Modell noch nicht vorhanden ist, kann vom Koppelprogramm, Build a model, Figuren 1 und 2 oberhalb der Zeile repeat steps, aus, in entsprechendes Programm zur Modellerzeugung aufgerufen werden.

Für jedes mit einer Zahl markierte Volumenelement ist ein Satz mit Materialdaten, Figuren 1 und 2 jeweils rechte Spalte im Bild, für die Werte dieser Größen vorhanden. Die Materialdaten können Konstanten sein oder von ein oder mehreren anderen physikalischen Größen abhängig sein und/oder durch entsprechende Kennlinien angegeben werden. In den beiden Figuren 1 und 2 sind Materialoperatoren beispielsweise spaltenartig aufgeführt. Alle Materialdaten werden in ein File zusammengefasst. Es wird mit dem Koppelprogramm erzeugt oder als vorhandenes File in den Berechnungsordner kopiert.

Für die markierten Oberflächen des Modell wird für jede Berechnung der ausgewählten physikalischen Größe angegeben, welchen Wert die Randbedingung hat und welcher Art sie ist. Vom Programm wird das auf zwei Arten gesteuert:
- Durch Selektieren der Oberflächennummern und Angabe der-Kennzahlen in einer Tabelle.
- Durch entsprechende SCRIPT-Befehle, die vor oder nach einer Berechnung ausgeführt werden.

Die Beschriftung in den Figuren, soweit sie Worte oder Erläuterungen umfassen, sind in der in der Fachwelt üblichen fachenglischen Sprache aufgeführt.

Figur 1 zeigt die Ebene/Oberfläche in Bereitschaft zur interaktiven Eingabe der gekoppelten FEM-Simulationen nach Start. Das Aktionsfeld, in der die Abfolge der Berechnungsprogrammaufrufe durch Aufziehen der Operatoren per "Drag und Drop" eingetragen wird, befindet sich mit ihrer schachbrettartigen Struktur im Zentrum der Oberfläche. In der Zeile darüber werden spaltenweise die Anzahl der identischen Wiederholungen der zugeordneten Spaltenfolge eingetragen. Unter dem Aktionsfeld ist die Zeile, in der spaltenweise für zeitabhängige Berechnungen das zu jeder Rechenfolge zugehörige Zeitintervall eingetragen wird.

Links am Rand sind gestapelt die Operatoren T, E, j, B, U, u und, hier noch als Leerfelder, der Operator für die Eigenfrequenzberechnung und der für die Strömungsgeschwindigkeit gestapelt, wobei jeder stellvertretend für die Berechnung mit einem Rechenprogramm, meist FEM-Programm, steht.
Der Operator zur Berechnung der Temperatur T ist hier beispielsweise abhängig: vom Magnetfeld B, vom elektrischen Feld E, von der Stromdichte j, von dem Makromaschennetz U, der Auslenkung u bei der FEM, der Eigenfrequenz ω und der Strömungsgeschwindigkeit v; der Opertor zur Berechnung des elektrischen Felds E von B, T, U, u, ω und v;
der Operator zur Berechnung der Stromdichte j von B, T, U, u, ω und v;
der Operator zur Berechnung des Magnetfeldes B von T, E, j, U, u, ω und v;
der Operator zur Berechnung des Makromaschennetzes U, dem Maschennetzgenerator, von T, E, j, B, ω und v;
der Operator u für die FEM-Berechnung von T, E, j, B, ω und v. Der Operator für die Eigenfrequenz ist hier noch nicht als bereit angezeigt, ebenso der Operator v für die Strömungsgeschwindigkeit.

Die Abhängigkeit der Operatoren sind durch ihre jeweiligen Argument angezeigt. Die Abhängigkeiten wird mit der Anzeige, der Maus, durch anklicken der abhängigen Operatoren in der in Klammern angegebenen Argumentliste gesetzt.

Rechts vom Aktionsfeld sind die Materialparameter der Bauteile stapelartig aufgelistet, die bei der Berechnung berücksichtigt werden können oder müssen. Diese Materialoperatoren können abhängig sein, das kann wie bei den Operatoren auf der linken Seite des Feldes über Argumente angedeutet werden. Aufgeführt sind hier :
die Dichte p, die spezifische Wärme Cp, die Wärmeleitfähigkeit σ_{T}, die elektrische Leitfähigkeit σ, die Permeabilität p, die Wärmeausdehnung α, der E-Modul E, das Form-Gedächtnis-Material S und die Viskosität v die Dichte ρ. Die möglichen Abhängigkeiten werden erst dann in der Argumentliste dargestellt, wenn entsprechende Operatoren für die Berechnung in der Aktionsebene vorhanden sind. Für einen weiteren Operator ist darunter noch ein freies Leerfeld.

In Figur 2 ist für das Aufzeigen des Prinzips in der ersten Spalte des Aktionsfeldes eine einfache Berechnungsfolge dargestellt. Es soll die hier die FEM-Berechnung der temperaturabhängigen Verschiebung eines Bauteiles durch den Operator u durchgeführt werden.

Das Bauteil wird mit Strom beheizt, daher hängt die Temperatur, die vom Operator T berechnet wird, ihrerseits von der Heizstromdichte j ab. Diese Abhängigkeiten sind im Argumentbereich in den Operatorsymbolen eingetragen. Es muss nur noch der Operator u auf die Aktionsebene gezogen werden. Die abhängigen Operatoren werden automatisch gesetzt und erhalten vordefinierte SCRIPTs, welche die Kopplung untereinander beschreiben. Die Nummer des SCRIPTs ist in der linken oberen Ecke der Operatorabbildung angegeben. Der Operator T ist hier dem SCRIPT 1 zugewiesen, Operator j dem SCRIPT 2.

Jetzt sind die Operatoren zur Berechnung der Dehnung, Strain, und zur Temperatur T aktiv; die Materialparameter können bei der Berechnung davon abhängig sein. Dies wird gekennzeichnet, indem bei den entsprechenden Materialparametern diese Abhängigkeiten zunächst in weißer Farbe markiert sind. Eine Berücksichtigung bei der Berechnung kann nur dann erfolgen, wenn für die Materialien entsprechende Kennlinien für die Abhängigkeit von einem Operator vorhanden und den Berechnungsprogrammen zugänglich, d.h. im Materialfile enthalten sind. Mit der Befehlstaste "check file", rechts unten in Fig. 2, wird der Materialparameter dann aktiviert und beispielsweise in schwarzer Farbe dargestellt, wenn wenigstens für eine Materialnummer eine Kennlinie für die Operatorabhängigkeit des Parameters vorhanden ist. Mit der Taste "check Set", unter "check file", erfolgt dies, wenn für eine ausgewählte Materialnummer die Kennlinie vorhanden ist. Ist zum Beispiel für die Materialnummer 1 die Abhängigkeit des E-Modul von der Dehnung durch eine Kennlinie gegeben, so wird die Variable "Strain" aktiv gezeichnet. Sind mehrere solche Kennlinien für verschiedene Temperaturen vorhanden, wird auch die Variable T aktiv, in obiger Farbe schwarz, dargestellt.

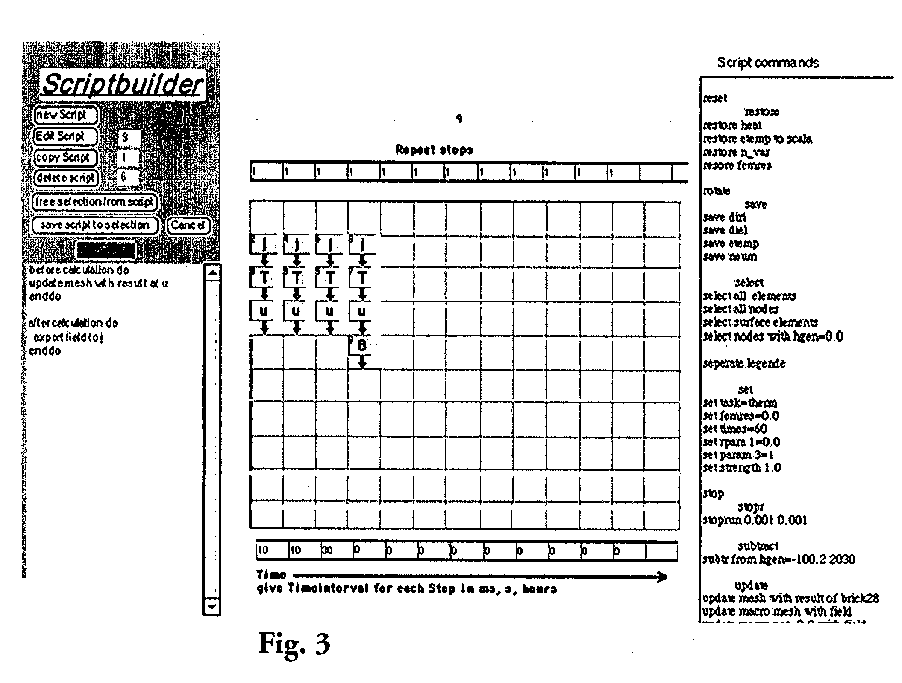

In Figur 3 ist die skizzierte Berechnungsfolge für u viermal zeitabhängig durchgeführt, und zwar für die erste Spalte 10, für die zweite Spalte ebenfalls 10, für die dritte Spalte 30 msec. In jeder Folge wird der Heizstrom durch SCRIPT-Befehle für den Operator j eingestellt. Somit werden automatisch ganze Kennlinien berechnet. Am Ende der letzten Folge soll noch die Berechnung des Magnetfeld B des ausgelenkten Bauteiles erfolgen und die Ergebnisse wieder zu einer erneuten Berechnung des Stromes verwendet werden. (Ohne besondere Eingabe wäre die Berechnungszeit in sec.) Hierzu hat der Operator B in SCRIPT-Nr. 9 die SCRIPT-Befehle "update mesh with result of u " und "export field to j" bekommen.

Die SCRIPT-Befehle werden in der rechts in Figur 3 vorhandenen Liste selektiert und in das SCRIPT-Edit-Feld links kopiert oder direkt eingegeben.

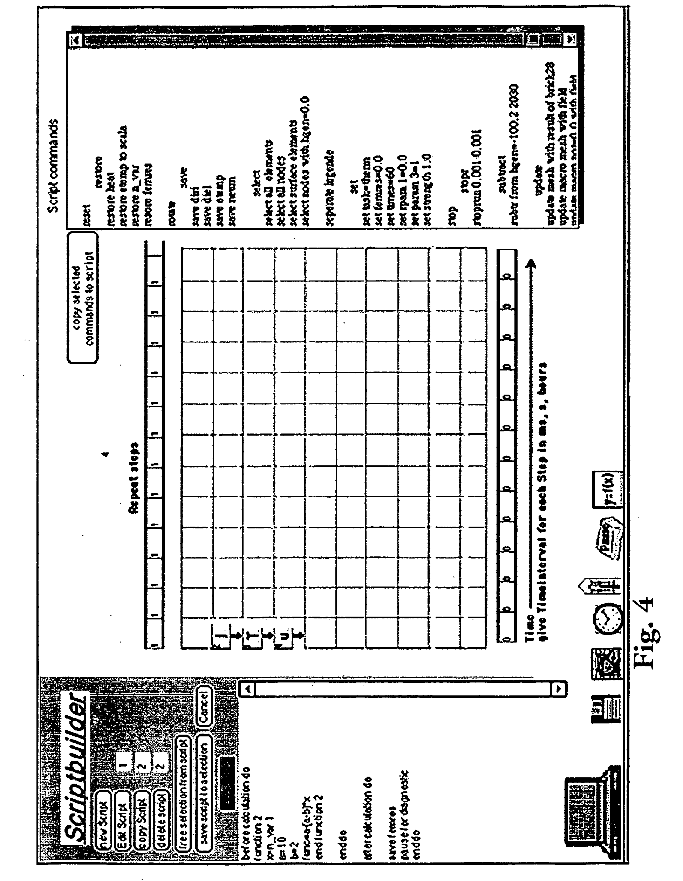

In Figur 4 sind am unteren Rand des Feldes beispielsweise sechs Werkzeuge (Tools) gezeigt, mit denen Scriptbefehle generiert werden können. Die Werkzeuge erscheinen nach dem Anklicken des ursprünglich geschlossenen Koffers mit der Maus am Bildschirm. Werden sie auf einen Operator in der Aktionsebene gezogen, schreiben sie werkzeugspezifische Befehle in das zugehörige SCRIPT. Besitzt der Operator noch kein SCRIPT, wird automatisch ein neues generiert. In der Figur 4 wird durch das Diskettensymbol der Befehl "save frames" und durch das Pausesymbol der Befehl "pause for diagnostic" geschrieben und durch das Funktionensymbol y = f(x) die "function 2 " definiert, entsprechende die andern.

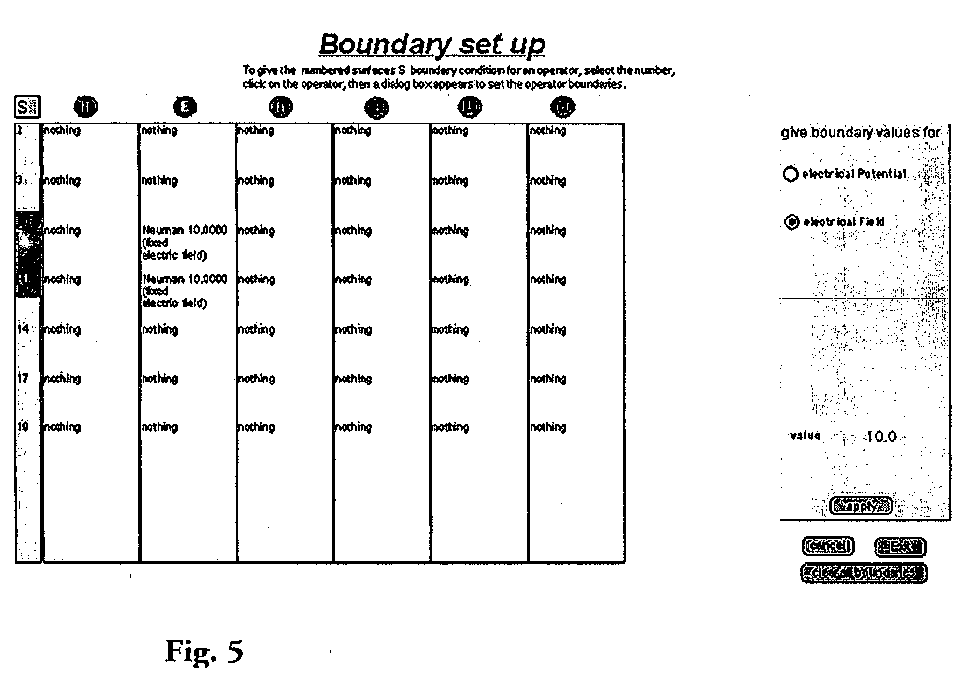

In Figur 5 wird das Setzen der Randbedingungen, Boundary set up, an durch Zahlen gekennzeichneten Oberflächen dargestellt. In diesem Beispiel sind die Oberflächen mit der Kennnummer 4 und 11, Spalte ganz links, durch schwarze Unterlegung selektiert. Der Operator E in weißem Druck ist ausgewählt. Es werden also Randbedingungen für die Berechnung des elektrischen Feldes gesetzt. Siehe rechts im Feld die Aufforderung zur Randwertvorgabe, in diesem Fall für das elektrische Feld (electric field). Das kann ein vorgegebenes elektrisches Potential sein, Dirichlet Randbedingung, oder die Angabe des Feldwertes, Neuman Randbedingung, sein. Hier wird das elektrische Feld mit dem Wert 10 V/m angegeben und automatisch in die Liste eingetragen.

Für die markierten Flächen werden nun nacheinander Randbedingungen für die anderen Rechenprogramme angegeben. Anhand dieser Angaben lassen sich dann Randbedingungen durch SCIPT-Befehle automatisch generieren, bevor die Programme zur Berechnung der Operatoren aufgerufen werden.

Ist die vor der eigentlichen Berechnung notwendige Verknüpfung, das Preprozessieren, fertig, wird über das Drücken des Knopfs "check for completeness"am oberen Rand des Feldes über dem Aktionsfeld rechnerintern noch mal geprüft, ob der geplante Berechnungsaufwand mit der Speicherkapazität verträglich ist oder nicht. Wenn ja erscheint an Stelle der Knopf "run" für den Start des Berechnungsablaufs; wenn nein, muß das Preprocessing noch mal daraufhin überprüft werden. Bei Aktivierung nur eines Operators erscheint nach dem Drücken des check-for-completeness-Knopfes gleich der run-Knopf.

## Patentansprüche

1. Verfahren zur Kopplung, Preprozessierung, physikalischer und geometrischer Berechnungsprogramme mit einer Datenverarbeitungsanlage mit denen physikalische, untereinander gekoppelte Größen sowie geometrische Größen bei der Simulation eines Bauteils für einen technischen Einsatz berechnet werden,
**dadurch gekennzeichnet, dass:**
- das Berechnungsprogramm zur Berechnung der jeweiligen physikalischen Größe durch ein Operatorsymbol, das auf die physikalische Größe hinweist, symbolisiert wird, wobei hinter jedem Operator in Klammer seine Argumente als andere weitere Operatoren, von denen er abhängig sein kann, in Klammern eingetragen werden,
- alle Operatorsymbole auf einem marginalen Teilbereich des an die Datenverarbeitungsanlage gekoppelten Bildschirms spezifisch unterscheidbar von anderen sichtbar dargestellt und abgelegt werden,
- zusätzlich Symbole für einen Maschennetzgenerator für Finite Elemente Programme und für nur ein die Geometrie beschreibendes Maschennetz eingeführt und ebenfalls auf dem Bildschirm an einem andern marginalen Teilbereich sichtbar abgelegt werden,
- alle zu einer Berechnung notwendigen und zu verwendenden Operatorsymbole vom marginalen Teilbereich mit einer PC-Maus in ein auf dem Bildschirm zentral angeordnetes Aktionsfeld, der Matrix, mit aus Zeilen und Spalten gebildeten Elementen, den Matrixelementen, gezogen und jeweils in einem vorgesehenen Matrixelement abgelegt werden,
wobei:
die zu der Berechnung gezogenen Operatoren gegenüber den nicht gezogenen am Rande visuell markiert werden, diejenigen Operatoren, von denen ein solcher, in einem Matrixelement abgelegter, abhängig ist, in der selben Spalte darüber automatisch mit abgelegt werden, wodurch eine Befehlsfolge der Berechnungsabarbeitung der Spalte eingerichtet wird,
- in die Matrix gezogene Operatoren einzeln oder in Gruppen durch jeweils einen Indikator selektiert werden, um ihnen spezielle Aufgaben für den Rechenlauf in Form von Befehlsleisten, SCRIPTS genannt, zu geben, die auch Kommandos zum Export von Daten, zum Ändern der Randbedingungen sowie Materialdaten und Steuerparameter der Programme enthalten,
wobei SCRIPT-Befehle automatisch erzeugt werden, wenn Abhängigkeiten zwischen den Operatoren definiert sind,
- den Befehlsfolgen Befehle der Form "before calculation do" oder "after calculation do" vorangestellt werden, wodurch angegeben wird, ob die zuvor spezifizierten Anweisungen vor oder nach dem Berechnen ausgeführt werden sollen,
- in dem Aktionsfeld die Nummer des einem Operator zugeordneten SCRIPTS im Operatorsymbol angezeigt wird,
- die Scriptbefehle einem Operator in der Aktionsebene auch gegeben werden können, indem Symbole, die für einen Befehl oder eine Folge von Befehlen stehen, auf ihn gezogen werden,
- auf dem Feld interaktiv eine Liste, Boundary set up genannt, erzeugt wird, in der für markierte Randflächen angegeben ist, welche Randbedingungen bei den Berechnungen gelten.

2. Verfahren nach Anspruch 1,
**dadurch gekennzeichnet,**
**dass** jede Spalte am Kopf mit einem Eingabefeld für die Angabe der wievielfachen Abarbeitung der Spalte, repeat Steps, und am Fuße der Spalte mit einem Eingabefeld für die Angabe eines vorgesehenen Zeitintervalls für die Berechnung zeitabhängiger Vorgänge, Time, versehen wird.

3. Verfahren nach Anspruch 2,
**dadurch gekennzeichnet,**
**dass** die spaltenartig angelegten Randflächen auf der interaktiven Liste mit je einer Zahl markiert werden.

## Claims

1. Method for coupling, pre-processing, physical and geometric calculation programs in a data processing system, whereby coupled physical variables and geometric variables are calculated during simulation of a component for a technical application, **characterised in that:**
- the calculation program for calculating the respective physical variable is symbolised by an operator symbol, which indicates the physical variable, wherein behind each operator is provided, in brackets, its arguments as well as other additional operators on which it can be dependent, in brackets,
- all operator symbols are represented and deposited on a marginal region of the screen coupled to the data processing system so as to be distinguishable from others in a clearly visible manner,
- in addition, symbols for a meshed network generator, for finite element programs and for only one meshed network describing the geometry are introduced and are also visibly deposited in another marginal region on the screen,
- all operator symbols that are necessary to a calculation and are to be used are dragged from the marginal region by means of a PC mouse into an action field centrally arranged on the screen, the matrix, with elements formed from lines and columns, the matrix elements, and are each deposited in a matrix element provided, wherein:
the operators needed for the calculation are marked visually at the margin compared to the ones not needed, those operators on which such a moved operator, deposited in a matrix element, is dependent, are also automatically deposited in the same column, an instruction sequence for the calculation processing of the column thereby being established,
- operators dragged into the matrix individually or in groups are selected in each case by an indicator in order to give them special tasks for the calculation in the form of instruction report groups, called SCRIPTS, which also include commands for exporting data, changing boundary conditions as well as material data and control parameters of the programs,
wherein SCRIPT instructions are automatically generated if dependencies between the operators are defined,
- instructions in the form of "before calculation do" or "after calculation do" are placed ahead of the instruction sequences, thereby indicating whether the previously specified statements are to be executed before or after the calculation,
- in the action field the number of the SCRIPT associated with an operator is displayed in the operator symbol,
- the script instructions can also be given to an operator in the action window, by dragging symbols, standing for an instruction or a sequence of instructions, onto the said operator,
- a list, called a boundary set up, is generated interactively on the field, the said list indicating for marked boundary areas which boundary conditions are valid for the calculations.

2. Method according to claim 1, **characterised in that** each column is provided at the top with an input field for indication of how many repeat steps, are being performed, and, at the foot of the column with an input field for indication of a provided time interval for the calculation of time-dependent procedures, Time.

3. Method according to claim 2, **characterised in that** the boundary areas on the interactive list applied in a column-like manner are each marked by a number.

## Revendications

1. Procédé de couplage, de prétraitement de programmes de calculs physiques et géométriques avec une installation de traitement de données qui calcule les grandeurs physiques couplées entre elles ainsi que les grandeurs géométriques pour la simulation d'une pièce destinée à une application technique,
**caractérisé en ce qu'**
- on symbolise le programme de calcul servant à calculer la grandeur physique respective par un symbole opérationnel se référant à la grandeur physique et derrière chaque opérateur, ses arguments sont placés entre parenthèses ainsi que d'autres opérateurs dont il peut dépendre, sont indiqués entre parenthèses,
- tous les symboles d'opérateur sont représentés dans une zone partielle marginale de l'écran couplé à l'installation de traitement de données, de manière visible pour être distingués de manière spécifique et ces symboles sont enregistrés,
- on enregistre de manière visible des symboles supplémentaires pour un générateur de réseau maillé pour des programmes à éléments finis et seulement pour un réseau maillé décrivant la géométrie et on fait également apparaitre sur l'écran dans une autre zone partielle marginale,
- tous les autres symboles d'opérateur à utiliser et nécessaires à un calcul d'une zone partielle marginale, sont tirés à l'aide d'une souris d'ordinateur dans un élément de matrice d'un champ d'action, au centre de l'écran image, la matrice comportant des éléments des lignes et des colonnes, c'est-à-dire des éléments de matrice et ils sont chaque fois placés dans un élément de matrice prédéfini.
procédé selon lequel,
- on marque de manière visuelle le bord des opérateurs utilisés pour le calcul par rapport aux opérateurs non sélectionnés dont l'un est déposé dans un élément de matrice, au dessus, automatiquement dans la même colonne, de façon à organiser une succession d'ordres du travail de calcul de la colonne,
- les opérateurs déplacés dans la matrice sont sélectionnés séparément ou en groupe chaque fois par un indicateur pour leur attribuer des taches spéciales pour le déroulement du calcul, sous la forme de listes d'ordres appelées SCRIPTS, qui contiennent également des ordres pour exporter des données, pour modifier les conditions limites ainsi que des données matérielles et des paramètres de commande des programmes,
- des ordres SCRIPTS étant générés automatiquement si des liens sont définis entre les opérateurs,
- les successions d'ordres étant précédées d'ordres sous la forme "before calculation do" ou "after calculation do", indiquant si les remarques spécifiées préalablement doivent être exécutées avant ou après le calcul,
- on indique dans le champ d'action, le numéro du SCRIPT associé à un opérateur dans le symbole d'opérateur,
- les ordres de SCRIPTS peuvent également être donnés à un opérateur dans le plan d'action en reliant à celui-ci les symboles correspondant à un ordre ou à une suite d'ordres,
- on génère dans le champ de manière interactive, une liste appelée Boundary set up, indiquant les zones marginales marquées qui valent comme conditions aux limites pour les calculs.

2. Procédé selon la revendication 1,
**caractérisé en ce que**
chaque colonne comporte en entête "repeat Steps", un champ d'entrée pour l'indication des traitements répétés et à la base de la colonne, un champ d'entrée Time pour indiquer un intervalle de temps prédéfini pour le calcul d'opérations dépendant du temps.

3. Procédé selon la revendication 2,
**caractérisé en ce que**
les surfaces marginales définies comme des colonnes sont marquées sur la liste interactive avec chaque fois un numéro.
